Europäisches Patentamt

(19) European Patent Office

Office européen des brevets

(11) Numéro de publication: **0 037 316**
**B1**

(12) **FASCICULE DE BREVET EUROPEEN**

(45) Date de publication du fascicule du brevet: **12.09.84**

(21) Numéro de dépôt: **81400440.4**

(22) Date de dépôt: **20.03.81**

(51) Int. Cl.³: **G 03 B 27/54, G 03 B 15/00**

(54) **Appareil de reproduction authentifiable d'un document original de base.**

(30) Priorité: **02.04.80 FR 8007450**

(43) Date de publication de la demande:
**07.10.81 Bulletin 81/40**

(45) Mention de la délivrance du brevet:
**12.09.84 Bulletin 84/37**

(84) Etats contractants désignés:
**AT BE CH DE GB IT LI LU NL SE**

(56) Documents cités:
**FR-A-1 115 917**
**FR-A-1 555 729**
**FR-A-2 177 489**
**US-A-1 781 044**
**US-A-1 963 510**
**US-A-3 682 539**
**US-A-4 093 370**

(73) Titulaire: **Chamoux, Jean-Pierre**
**67, rue de Miromesnil**
**F-75008 Paris (FR)**

(72) Inventeur: **Chamoux, Jean-Pierre**
**67, rue de Miromesnil**
**F-75008 Paris (FR)**

(74) Mandataire: **Laget, Jean-Loup et al**
**Cabinet Pierre Loyer 18, Rue de Mogador**
**F-75009 Paris (FR)**

Courier Press, Leamington Spa, England.

## Description

La présente invention a pour objet un appareil de reproduction authentifiable d'un document original de base.

Actuellement, lorsqu'on micrographie un document, il n'apparaît pas toujours les modifications apportées ni la structure intime du support (par exemple, filigranes, défauts, anomalies).

Actuellement, une microforme est obtenue à l'aide d'une source de lumière qui possède un spectre d'émission dont le rayonnement se situe dans le visible ("lumière blanche"); le détail intime du document apparaît peu; les différences de brillance spéculaire des détails et la diviersité des couleurs de sont pas mises en évidence.

Un procédé de reproduction authentifiable d'un document original de base tend à fournir des garanties techniques quant à la fidélité, la pérennité et la difficulté de falsification de la reproduction. Il permet d'obtenir une reproduction la plus conforme et la plus authentifiable du document micrographié.

Ce procédé consiste à réaliser sur un même support photosensible deux prises de vues du document de base, par micrographie, une prise de vue en source de "lumière blanche" et une prise de vue en source de lumière dont le spectre d'émission, donc le rayonnement, se situe principalement dans le violet et l'ultraviolet ou source de "lumière noire", de manière à mettre en évidence la structure du document: facteurs différents déterminant un document original, tels que défauts, filigranes, anomalies, etc., et modifications éventuelles qui lui ont été apportées, ces différents éléments n'étant pas nécessairement visibles à l'oeil nu sur le document original.

La prise de vue sous "lumière blanche" permet d'obtenir une microimage traditionnelle assurant la lisibilité et l'exploitation éventuelle des informations contenues dans la document original micrographié.

La deuxième micro-image obtenue sous "lumière noire" met en évidence chaque détail par phénomènes de rayonnements fluorescents spécifiques, par exemple surépaisseurs, retouches, grattages, "masquages", filigranes, etc.

Une troisième micro-image dite "d'identification" peut être associée, sur le même support, aux deux micro-images précédentes et peut comporter, entre autres, une mire qui garantit contre les duplications possibles de la microforme de première génération; toute duplication se traduisant, en effet, par une perte de définition.

La présente invention vise un appareil pour la mise en oeuvre du procédé de reproduction authentifiable d'un document original de base exposé ci-dessus, cet appareil comprenant, sous un ensemble compact susceptible d'être installé sans inconvénient en lumière ambiante:

— une source de "lumière blanche";
— une source de "lumière noire" fonctionnant en permanence;
— un mécanisme étanche "avance film" avec magasins débiteur et récepteur;
— un équipage optique unique de prise de vue servant à une prise de vue sous "lumière blanche", à une prise de vue sous "lumière noire" et à une prise de vue "d'identification", le tout sur un même support photosensible ou film.

L'appareil selon l'invention permet d'obtenir une microforme sur des films de formats 8, 16 et 35 mm et, par extension, sur des films de formats supérieurs.

D'autres caractéristiques et avantages de la présente invention ressortiront de la description qui va suivre faite en regard des dessins annexés, sur lesquels:

La figure 1 représente, schématiquement, une reproduction d'un support photosensible;

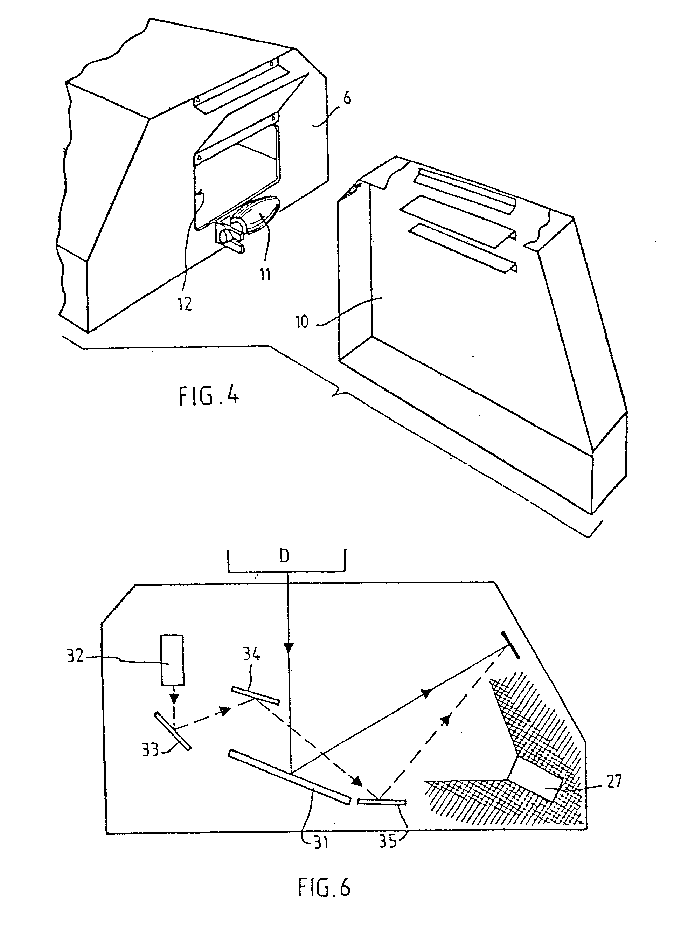

La figure 2 est une vue en perspective, de devant, d'un appareil selon l'invention;

La figure 3 est une vue en perspective, de l'arrière, d'un appareil selon l'invention;

La figure 4 représente en perspective éclatée, partielle, deux éléments de structure de l'appareil selon l'invention;

La figure 5 est une vue en perspective schématique des organes intérieures de l'appareil de l'invention; et

La figure 6 est une vue schématique représentative d'une partie des cheminements optiques à l'intérieur de l'appareil.

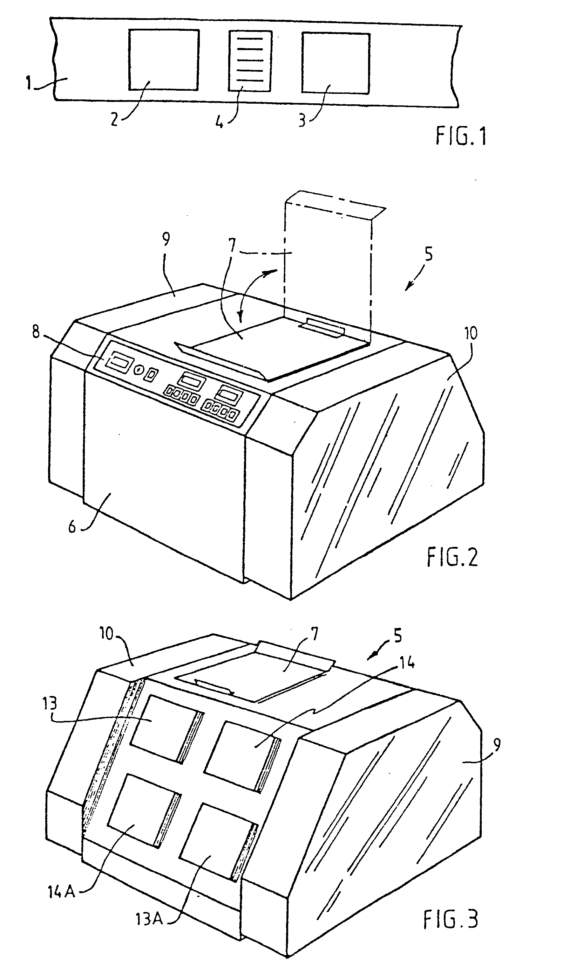

L'appareil de reproduction conforme à l'invention permet (figure 1) la présentation sur un même support photosensible (film 1) d'une double prise de vues: une prise de vue sous "lumière blanche" 2 et une prise du vue sous "lumière noire" 3, cette double prise de vue étant accompagnée ou non d'une prise de vue d'identification 4.

Cette identification 4 caractérise la double reproduction 2, 3 sur le film 1 du document D et peut comporter, en particulier, les informations ci-après:

— une mire de définition pour le contrôle de la qualité de la prise de vue et qui garantit contre les recopies possibles;
— une échelle de mesure du taux de réduction;
— un numéro d'identification chronologique de la prise de vue;
— un numéro d'identification du matériel;
— une charte de gris ou de couleurs;
— un moyen d'identification de l'opérateur, par exemple les empreintes digitales ou la photographie;
— une identification de l'exploitant;
— etc...

cette liste n'est, bien entendu, pas exhaustive.

Des moyens sont prévus dans l'appareil conforme à l'invention pour définir lesdits éléments d'identification et l'un de ces moyens sera décrit plus loin en relation avec les cheminements optiques entre lesdits moyens et les moyens participant à la prise de vue (un compteur de vues inviolable dans l'exemple choisi).

Cette troisième prise de vue 4 peut être éventuellement supprimée et les informations concernant l'identification peuvent être enregistrées directement sur les prises de vues principales ou à côté.

Dans la forme de réalisation représentée, un appareil 5 conforme à l'invention est réalisé sous la forme d'un bloc compact de façon à être utilisé comme un matériel de bureau, c'est-à-dire sans nécessiter son implantation en chambre noire comme pour les caméras traditionnelles.

Il comporte un coffret central 6 dont la partie supérieure est équipée d'un dispositif 7 qui reçoit les documents à microcopier D, soit un dispositif simple comme représenté, soit à alimentation semi-automatique ou automatique (non représenté).

Un pupitre de commande 8 prévu sur une face de ce coffret rassemble les fonctions suivantes:

— marche-arrêt commandées par clé de sécurité,
— numérotation de vues par système inviolable (ce numéro est transcrit dans la vue "identification"),
— les commandes de prise de vues, les compteurs de vues journaliers.

Les organes optiques et mécaniques nécessaires pour la prise des vues sont disposés à l'intérieure de ce coffret 6.

Deux coffrets latéraux 9 et 10 disposés de part et d'autre du coffret central 6 contiennent les sources "lumière noire". Un seul coffret latéral 10 est représenté sur la figure 4; une lampe "lumière noire" 11 y est normalement comprise devant une fenêtre 12 pratiquée dans la paroi latérale du coffret central 6 contiguë au coffret latéral considéré. Cette lampe "lumière noire" 11 fonctionne en permanence.

L'appareil selon l'invention peut être équipé soit d'un mécanisme "avance film" avec magasins débiteur 13 et récepteur 14, soit de deux mécanismes identiques 13—14 et 13A—14A. Les magasins sont étanches à la lumière, ce qui permet le chargement et le déchargement de l'appareil en lumière ambiante.

Le premier mécanisme "avance film" permet la double prise de vues en "lumière blanche" et en "lumière noire" et la prise de vue d'identification (voir figure 1); le deuxième mécanisme "avance film" permet, par exemple la prise de vue en "lumière blanche" pour la confection d'une microforme traditionnelle, ou une deuxième microforme identique.

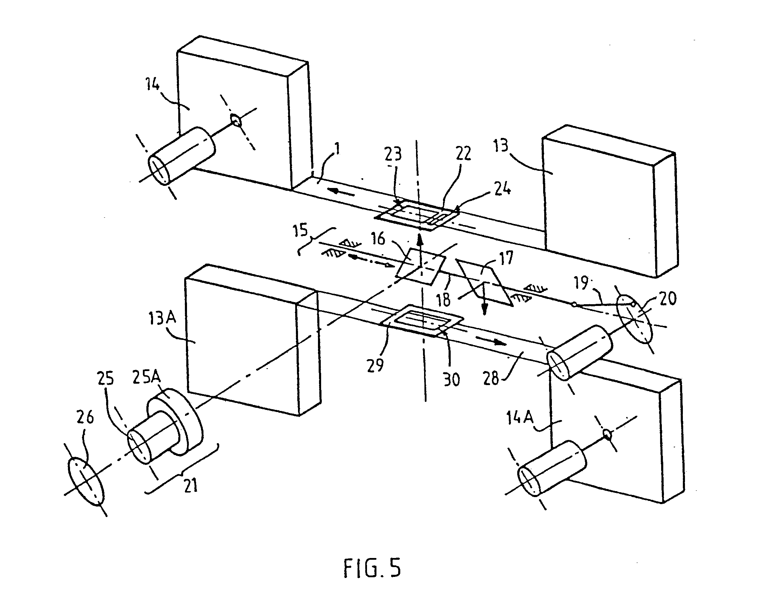

Un moyen est prévu pour assurer l'exposition du deuxième mécanisme "avance film". Ce moyen peut être un dispositif 15 de translation de miroirs à 90° 16 et 17, comme représenté figure 5.

Ce dispositif de translation comprend un chariot 18, sur lequel sont montés les miroirs, relié par une biellette 19 à un disque d'actionnement 20.

Un équipage optique de prise de vues 21 est schématisé sur la figure 5 et sert à la prise de vue sous "lumière blanche" 2, à la prise de vue sous "lumière noire" 35 et à la prise de vue "d'identification" 4, le tout sur un même support photosensible ou film 1.

Le film 1 qui est déplacé entre le magasin 13 et le magasin 14 passe derrière un cadre 22 montrant une fenêtre principale 23 et une fenêtre "d'identification" 24. Le miroir à 90° 16 du dispositif de translation 15 s'interpose entre ce cadre et l'équipage optique de prise de vues 21 comportant un objectif 25 et un obturateur 25A.

Un filtre ultraviolet 26 est placé devant cet équipage optique; sa présence permet de n'enregistrer que la partie visible de la fluorescence du document micrographié.

Une lampe flash 27 éclaire le document D au moment de la prise de vue en "lumière blanche", qu'il s'agisse de la prise de vue en "lumière blanche" 2 ou de la prise du vue en "lumière blanche" pour la confection d'une microforme dite de gestion, bien entendu sur un support photosensible ou film 28 autre que le film 1.

L'incorporation du dispositif de translation de miroirs à 90° permet donc la prise de vue du même document sur deux films différents.

Pour obtenir des microformes de gestion traditionnelles sur le film 28, il suffit de translater le dispositif 15 pour que le miroir à 90° 17 soit interposé entre un cadre 29 à fenêtre 30 et l'équipage optique de prise de vues 21.

La lumière renvoyée par le document D éclairé, vient frapper un miroir de renvoi 31 pour être dirigée sur l'objectif de l'équipage optique de prise de vues 21.

Dans la forme de réalisation représentée à titre d'exemple, la lumière renvoyée par un compteur de vues inviolable 32 frappe une série de miroirs de renvoi 33, 34 et 35 pour être dirigée sur l'objectif de l'équipage de prise de vues 21.

L'appareil selon l'invention comprend enfin l'équipement électronique qui assure la programmation des différentes opérations de prise de vues en "lumière noire" et en "lumière blanche" et pour "l'identification". Cet équipement ne fait pas spécifiquement partie de l'invention et n'est donc ni décrit, ni représenté.

Il est bien entendu que la présente invention n'a été décrite et représentée qu'à titre d'exemple préférentiel et que l'on pourra apporter des équivalences dans ses éléments constitutifs sans, pour autant, sortir du cadre de ladite invention qui est définie dans les revendications qui suivent.

## Revendications

1. Appareil de reproduction authentifiable d'un document original de base, caractérisé en ce qu'il comprend, sous un ensemble compact (6), étanche à la lumière susceptible d'être installé sans inconvénients en lumière ambiante: une source de "lumière blanche" (27), fonctionnant aux moments de la prise de vue en lumière blanche, une source de lumière noire (11) fonctionnant en permanence, un mécanisme étanche "avance film" avec magasins débiteur (13) et récepteur (14), un mécanisme de commandes des prises de vue et de l'éclairement en "lumière blanche", et un équipage optique unique de prise de vue servant au moins à une prise de vue sous "lumière blanche", et à une prise de vue sous "lumière noire" sur le même support photosensible ou film (1), de sorte que l'on obtienne sur ce support unique, d'une part une micro-image traditionnelle (2) assurant la lisibilité et l'exploitation éventuelle des informations contenues dans le document original micrographié; et d'autre part une micro-image d'authentification (3) mettant en évidence chaque détail du document de base par phénomènes de rayonnement fluorescents spécifiques (défauts, anomalies, surépaisseurs, retouches, grattages, masquages, filigranes, etc.).

2. Appareil de reproduction selon la revendication 1, caractérisé en ce qu'il comporte des moyens associés à l'équipage de prise de vue permettant une prise de vue d'identification sur le même support photosensible ou film, de sorte que l'on obtienne sur ce support, une troisième microimage (4) dite d'identification pouvant comporter, d'une manière non exhaustive:

— une mire de définition garantissant contre les duplications possibles de la microforme de première génération,
— une échelle de mesure du taux de réduction,
— une charte de gris ou de couleurs, et
— des moyens d'identifications divers.

3. Appareil selon l'une quelconque des revendications 1 et 2, caractérisé en ce que des moyens sont prévus pour diriger sur l'équipage optique de prise de vues, la lumière renvoyée par le document original de base et la lumière renvoyée par des moyens définissant lesdits éléments d'identification et par un compteur (32) inviolable pour le numéro chronologique.

4. Appareil selon l'une quelconque des revendications 1 à 3, caractérisé en ce qu'il comprend, entre l'équipage optique de prise de vues et le support photosensible ou film, un cadre à fenêtres comportant une fenêtre principale (23) et une fenêtre d'identification (24).

5. Appareil selon la revendication 1, caractérisé en ce qu'un filtre ultraviolet (26) est placé devant l'équipage optique (21) de prise de vues de manière à n'enregistrer que la partie visible de la fluorescence du document micrographié.

6. Appareil selon l'une quelconque des revendications 1 à 5, caractérisé en ce qu'il comprend un second mécanisme (13A, 14A) étanche "avance film" pour un autre support sensible ou film (28) et permettant de prendre des vues en "lumière blanches" pour la confection, sur cet autre support sensible, de microformes traditionnelles ou de microformes identiques.

7. Appareil selon l'une quelconque des revendications 1 à 6, charactérisé en ce qu'un moyen (17) est prévu pour assurer l'exposition du deuxième mécanisme "avance film".

8. Appareil selon la revendication 7, caractérisé en ce qu'un dispositif (15) de translation à miroirs à 90° interposé entre l'équipage optique (21) de prise de vues et les deux mécanismes (13, 14; 13A, 14A) "avance film" permet la prise de vues, soit sur l'un (1), soit sur l'autre (28) des supports photosensibles ou films de ces mécanismes.

9. Appareil selon l'une quelconque des revendications 1 à 8, caractérisé en ce qu'une lampe flash (27) éclaire le document de base au moment des prises de vues en lumière blanche.

10. Appareil selon l'une quelconque des revendications 1 à 9, caractérisé en ce qu'il comprend un coffret central (6) équipé d'un dispositif recevant le document original de base à micrographier et d'un pupitre de commande (8) et deux coffrets latéraux (9, 10) disposés de part et d'autre de ce coffret central et contenant chacun une source de "lumière noire".

## Patentansprüche

1. Gerät zur authentifizierbaren Reproduktion eines Originaldokuments, dadurch gekennzeichnet, daß es in einer kompakten lichtdichten Einheit (6), die ohne weiteres bei Umgebungsbeleuchtung installiert werden kann,

— eine Quelle "weißen" Lichts (27), die während der Aufnahmemomente mit weißem Licht wirksam ist,
— eine Quelle "schwarzen" Lichts (11), die dauernd wirksam ist,
— einen dichten Filmvorschubmechanismus mit Abgabe- und Aufnahmenmagazinen (13 bzw. 14),
— einen Steuermechanismus für die Aufnahmen und für die Beleuchtung mit "weißem" Licht,
— und eine gemeinsame optische Aufnahmevorrichtung aufweist, die dazu dient, mindestens ein Bild bei Beleuchtung mit "weißem" Licht und ein Bild bei Beleuchtung mit "schwarzem" Licht auf einen gemeinsamen lichtempfindlichen Träger oder Film (1) aufzunehmen, derart, daß man auf diesem gemeinsamen Träger einerseits ein übliches Mikrobild (2) erhält, das gegebenenfalls lesbar ist und die Auswertung der im mikrographierten Originaldokument enthaltenen Informationen ermöglicht, und andererseits ein Mikrobild zur Authentifizierung (3) erhält, das jedes Detail des Basisdokuments durch spezifische Fluoreszierende Strahlungserscheinungen verdeutlicht (Fehler, Anomalien, Dickstellen, Retouchen, Radierung, Maskierung, Wasserzeichen etc.).

2. Reproduktionsgerät nach Anspruch 1, dadurch gekennzeichnet, daß es Mittel aufweist, die der Aufnahmevorrichtung zugeordnet sind und ein Identifikationsbild auf demselben lichtempfindlichen Träger oder Film aufzunehmen gestatten, derart, daß man auf diesem Träger ein drittes Bild (4), Identifikationsbild genannt, erhält, das unter anderem folgende Bestandteile aufweisen kann:

— ein Testbild für die Auflösung, das gegen mögliche Duplizierung des Mikrofilms der ersten Generation schützt,
— einen Maßstab, der den Verkleinerungsfaktor angibt,
— einen Graukeil oder Farbkeil, und
— verschiedene Identifizierungsmittel.

3. Gerät nach einem beliebigen der Ansprüche 1 und 2, dadurch gekennzeichnet, daß Mittel vorgesehen sind, mit denen das vom Originaldokument reflektierte Licht und das von die Identifizierelements definierenden Mitteln sowie das von einem gesicherten Zähler (32) für die chronologische Reihenfolge kommende Licht zur optischen Aufnahmevorrichtung gelenkt werden.

4. Gerät nach einem beliebigen der Ansprüche 1 bis 3, dadurch gekennzeichnet, daß es zwischen der optischen Aufnahmevorrichtung und dem lichttempfindlichen Träger oder Film einen Fensterrahmen aufweist, der ein Hauptfenster (23) und ein Identifizierfenster (24) enthält.

5. Gerät nach Anspruch 1, dadurch gekennzeichnet, daß ein UV-Filter (2) vor der optischen Aufnahmevorrichtung (21) angeordnet ist, um nur den sichtbaren Teil der vom mikrographierten Dokument kommenden Fluoreszenz zu registrieren.

6. Gerät nach einem beliebigen der Ansprüche 1 bis 5, dadurch gekennzeichnet, daß es einen zweiten dichten Filmvorschubmechanismus (13A, 14A) für einen zweiten empfindlichen Träger oder Film (28) enthält, um Aufnahmen bei "weißem" Licht für die Herstellung üblicher Mikrobilder oder identischer Mikrobilder auf diesem anderen empfindlichen Träger zu ermöglichen.

7. Gerät nach einem beliebigen der Ansprüche 1 bis 6, dadurch gekennzeichnet, daß ein Mittel (17) vorgesehen ist, um die Belichtung des zweiten Filmvorschubmechanismus sicherzustellen.

8. Gerät nach Anspruch 7, dadurch gekennzeichnet, daß eine Verschiebevorrichtung (15) mit Spiegeln unter einem rechten Winkel zwischen der optischen Aufnahmevorrichtung (21) und den beiden Filmvorschubmechanismen (13, 14; 13A, 14A) die Aufnahme von Bildern entweder auf dem einen (1) oder auf dem anderen lichtempfindlichen Träger oder Film (28) dieser Mechanismen zu ermöglichen.

9. Gerät nach einem beliebigen der Ansprüche 1 bis 8, dadurch gekennzeichnet, daß eine Blitzlampe (27) das Basisdokument im Augenblick der Aufnahme bei weißem Licht erleuchtet.

10. Gerät nach einem beliebigen der Ansprüche 1 bis 9, dadurch gekennzeichnet, daß es ein zentrales Bauteil (6), das eine Vorrichtung zur Aufnahme des zu mikrographierenden Basisdokuments und ein Steuerpult (8) aufweist, sowie zwei setiliche Bauteile (9, 10) enthält, die zu beiden Seiten des zentralen Bauteils angeordnet sind und je eine Quelle "schwarzen" Lichts beinhalten.

**Claims**

1. Apparatus for making an authenticatable reproduction of a basic original document, characterized in that it comprises, within a light-tight compact assembly (6) able to be installed in ambient light without drawbacks: a source of "white light" (27) operating at the moments of taking a picture under white light, a source of "black light" (11) operating permanently, a light-tight film advance mechanism with feed (13) and take-up (14) magazines, a mechanism controlling the picture-taking system and the "white light" illumination, and a single picture-taking optical system serving at least for one picture-taking operation under "white light" and one picture-taking operation under "black light" on the same photosensitive support or film (1), so that there is obtained on this single support, on the one hand a conventional micro-image (2) assuring legibility and eventual exploitation of data contained in the original document being micrographed; and on the other hand an authentifying micro-image (3) bringing into evidence every detail of the basic document by means of specific fluorescent radiation processes (flaws, overthicknesses, retouches, erasures, "maskings", watermarks, etc...).

2. Reproduction apparatus according to claim 1, characterized in that it comprises means associated with the picture-taking system allowing to take an identification picture on the same photosensitive support or film, so as to obtain on this support a third micro-image (4) referred to as an "identification" image, which may comprise, not exhaustively:

— a definition pattern providing a guarantee against possible duplications of the first-generation microform,
— a scale for measuring the rate of reduction,
— a gray or coloured reference chart and
— various identification means.

3. Apparatus according to any of claims 1 and 2, characterized in that means are provided for directing upon the picture-taking optical system the light reflected from the basic original document and the light reflected by means defining the said identification elements and by a tamper-proof counter (32) for the chronological number.

4. Apparatus according to any of claims 1 to 3, characterized in that it comprises, between the picture-taking optical system and the photosensitive support or film, a frame with windows comprising a main window (23) and an identification window (24).

5. Apparatus according to claim 1, characterized in that an ultraviolet filter (26) is placed in front of the optical picture-taking system (21) so as to record only the visible fraction of the fluorescence of the document being micrographed.

6. Apparatus according to any of claims 1 to 5, characterized in that it comprises a second light-tight "film advance" mechanism (13A, 14A) for another sensitive support or film (28), said second mechanism allowing pictures to be taken in "white light" for producing on said other sensitive support conventional microforms or identical microforms.

7. Apparatus according to any of claims 1 to 6, characterized in that a means (17) is provided for assuring the exposure of the second "film advance" mechanism.

8. Apparatus according to claim 7, characterized in that a translation device (15) with 90° mirrors interposed between the optical picture-taking system (21) and the two "film advance" mechanisms allow pictures to be taken either on one (1) or the other (28) of the photosensitive supports or films of the said mechanisms.

9. Apparatus according to any of claims 1 to 8, characterized in that a flash lamp (27) illuminates the basic document at the moment pictures in white light are taken.

10. Apparatus according to any of claims 1 to 9, characterized in that it comprises a central cabinet (6) equipped with a device receiving the basic original document to be micrographed and a control panel (8), and two lateral cabinets (9, 10) disposed on either side of said central cabinet, each of said lateral cabinets containing a source of "black light".

FIG.1

FIG.2

FIG.3

FIG.4

FIG.6

FIG.5